# EUROPEAN PATENT APPLICATION

(11) **EP 4 478 156 A1**
(43) Date of publication of application: **18.12.2024**
(21) Application number: 23204410.7
(22) Date of filing: 18.10.2023
(51) Int. Cl.: G06F 1/3287, G06F 1/3234, G06F 1/3237

(54) **METHOD AND DEVICE FOR SAVING POWER**

(30) Priority: 16.06.2023 US 202318336268
(71) Applicant: MediaTek Inc., 30078 Hsinchu City (TW)
(72) Inventor: HUANG, Ching-Yao, Hsinchu City 30078 (TW); LIN, Bo-Yun, Hsinchu City 30078 (TW); JIANG, Tai-Ying, Hsinchu City 30078 (TW); WANG, Hui-Hsuan, Hsinchu City 30078 (TW)
(74) Representative: Patentship Patentanwaltsgesellschaft mbH

(57) **Abstract**

A method (300) for saving power is provided. The method (300) is used in a slave device. The method (300) includes receiving (S305) a first switch request indicating to switch a clock source from a first clock to a second clock when the slave device enters sleep mode. The method (300) includes transmitting (S310) a first clock source signal indicating to switch the clock source from the first clock to the second clock to registers. The method (300) includes switching (S315) the clock source from the first clock to the second clock to the registers according to the first clock source signal.

## Description

### TECHNICAL FIELD OF THE INVENTION

The present disclosure generally relates to a method and a device for saving power. More specifically, aspects of the present disclosure relate to a method and a device for saving power in a System Power Management Interface (SPMI) slave device.

### BACKGROUND OF THE INVENTION

Computing devices abound in modern society. The proliferation of computing devices is at least in part attributable to the rise of mobile computing devices such as smartphones. Computing devices frequently rely on different specialized integrated circuits (ICs) that perform specific functions for the computing devices. When more than one IC is present, there must be an accepted protocol or standard through which the ICs may communicate with one another. Much as the ICs may be specialized in the tasks that they are capable of performing, so too have specialized protocols been created. One such protocol is the system power management interface (SPMI) put forth by the MIPI Alliance.

In the SPMI protocol, a simple SPMI slave device may work only when a master device provides a SPMI clock (SCLK) signal. When the SPMI slave device has only one single clock domain such as a system clock, the SPMI slave device cannot perform any functions once SPMI access is stopped and the system clock in the SPMI slave device is turned off.

In order to save power in a System on a Chip (SOC) of the SPMI slave device, the highspeed system clock will adaptively be turned off while the SPMI slave device is idle. However, function-related registers which use the system clock in the SPMI slave device are only updated when the system clock is active. Once the system clock is turned off, these registers may not update via the SPMI access, and other devices on the SPMI bus cannot communicate with the SPMI slave device when the system clock is off.

Therefore, there is a need for a method and a device for saving power to solve this problem.

### BRIEF SUMMARY OF THE INVENTION

The following summary is illustrative only and is not intended to be limiting in any way. That is, the following summary is provided to introduce concepts, highlights, benefits and advantages of the novel and non-obvious techniques described herein. Select, not all, implementations are described further in the detailed description below. Thus, the following summary is not intended to identify essential features of the claimed subject matter, nor is it intended for use in determining the scope of the claimed subject matter.

Therefore, the main purpose of the present disclosure is to provide a method and a device for saving power to enable the system clock to be turned off adaptively when the device is idle and enable the external devices to still communicate with the device during the period when the system clock is turned off.

In an exemplary embodiment, a method for saving power in a slave device is provided. The method is used in a slave device. The method comprises receiving a first switch request indicating to switch a clock source from a first clock to a second clock when the slave device enters sleep mode. The method comprises transmitting a first clock source signal indicating to switch the clock source from the first clock to the second clock to registers. The method comprises switching the clock source from the first clock to the second clock to the registers according to the first clock source signal.

In some embodiments, the method further comprises detecting whether a SPMI bus is idle; and transmitting the first clock source signal to the registers in response to the SPMI bus being idle.

In some embodiments, the method further comprises postponing transmitting the first clock source signal to the registers until the SPMI bus is idle in response to the SPMI bus not being idle.

In some embodiments, the method further comprises receiving a second switch request indicating to switch the clock source from the second clock to the first clock when the slave device enters wake-up mode. The method further comprises transmitting a second clock source signal indicating to switch the clock source from the second clock to the first clock to the registers.

In some embodiments, the method further comprises switching the clock source from the second clock to the first clock to the registers according to the second clock source signal.

In some embodiments, the slave device is clocked by the second clock when the slave device is in the sleep mode.

In some embodiments, the slave device is a SPMI slave device.

In some embodiments, the method further comprises allowing an external device to access the registers via a SPMI bus, wherein the registers are clocked by the second clock when the slave device is in the sleep mode.

In some embodiments, the external device is a SPMI master device.

In some embodiments, the first clock is a system clock, and the second clock is a system power management interface (SPMI) clock (SCLK).

In an exemplary embodiment, a device for saving power is provided. The device comprises a processor, registers and a dynamic clock source controller. The dynamic clock source controller is coupled to the processor and the registers and configured to receive a first switch request indicating to switch a clock source from a first clock to a second clock when the device enters sleep mode. The dynamic clock source controller is further configured to transmit a first clock source signal indicating to switch the clock source from the first clock to the second clock to registers. The dynamic clock source controller is further configured to switch the clock source from the first clock to the second clock to the registers according to the first clock source signal.

In an embodiment of the device, the dynamic clock source controller is further configured to: detect whether a SPMI bus is idle; and transmit the first clock source signal to the registers in response to the SPMI bus being idle. In an embodiment of the device, the dynamic clock source controller is further configured to: postpone transmitting the first clock source signal to the registers until the SPMI bus is idle in response to the SPMI bus not being idle. In an embodiment of the device, the dynamic clock source controller is further configured to: receive a second switch request indicating to switch the clock source from the second clock to the first clock when the device enters wake-up mode; and transmit a second clock source signal indicating to switch the clock source from the second clock to the first clock to the registers. In an embodiment of the device, the registers are further configured to: switch the clock source from the second clock to the first clock according to the second clock source signal. In an embodiment of the device, the device is clocked by the second clock when the device is in the sleep mode. In an embodiment of the device, the device is a SPMI slave device. In an embodiment of the device, the dynamic clock source controller is further configured to: allow an external device to access the registers via a SPMI bus, wherein the registers are clocked by the second clock when the device is in the sleep mode. In an embodiment of the device, the first clock is a system clock, and the second clock is a system power management interface (SPMI) clock (SCLK).

In an exemplary embodiment, a non-transitory computer-readable storage medium is provided. The non-transitory computer-readable storage medium containing instructions that, when executed by a subsystem in a slave device, cause the slave device to perform a method for saving power, the method comprising: receiving a first switch request indicating to switch a clock source from a system clock to a system power management interface (SPMI) clock (SCLK) when the slave device enters sleep mode; detecting whether a SPMI bus is idle; transmitting a first clock source signal indicating to switch the clock source from the system clock to the SCLK to SPMI registers in response to the SPMI bus being idle; and switching the clock source from the system clock to the SCLK by the SPMI registers according to the first clock source signal.

### BRIEF DESCRIPTION OF THE DRAWINGS

The accompanying drawings are included to provide a further understanding of the present disclosure, and are incorporated in and constitute a part of the present disclosure. The drawings illustrate implementations of the disclosure and, together with the description, serve to explain the principles of the disclosure. It should be appreciated that the drawings are not necessarily to scale as some components may be shown out of proportion to their size in actual implementation in order to clearly illustrate the concept of the present disclosure.
FIG. 1 is a block diagram of an SPMI system having multiple master devices and multiple slave devices attached to a two-wire SPMI bus.
FIG. 2 is a schematic diagram illustrating an example slave device for saving power according to an embodiment of the disclosure.
FIG. 3 is a flow chart illustrating the method for saving power in a slave device according to an embodiment of the disclosure.
FIG. 4 is a flow chart illustrating the method for saving power in a slave device according to an embodiment of the disclosure.
FIG. 5A shows a set of timing waveform depicting a switching operation during an idle period according to an embodiment of the disclosure.
FIG. 5B shows a set of timing waveform depicting a switching operation during a busy period according to an embodiment of the disclosure.
FIG. 5C shows a set of timing waveform depicting a switching operation during a busy period for a back-to-back transaction according to an embodiment of the disclosure.
FIG. 6 illustrates an exemplary operating environment for implementing embodiments of the present disclosure.

### DETAILED DESCRIPTION OF THE INVENTION

Various aspects of the disclosure are described more fully below with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using number of the aspects set forth herein. In addition, the scope of the disclosure is intended to cover such an apparatus or method which is practiced using another structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects. Furthermore, like numerals refer to like elements throughout the several views, and the articles "a" and "the" includes plural references, unless otherwise specified in the description.

It should be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion. (e.g., "between" versus "directly between", "adjacent" versus "directly adjacent", etc.).

In order to better describe the embodiments of the present disclosure, the specific terms used in the present disclosure are firstly defined as below.

Master device: A device on the SPMI bus that can drive the SCLK line.

Slave device: A device on the SPMI bus that is not capable of driving the SCLK line, i.e. not a Master device.

Bus arbitration: Bus arbitration is the process of allocating the bus to one device for the purpose of sending a sequence.

Sequence: A bus transaction on the SPMI bus that begins with bus arbitration, contains a sequence start condition (SSC), a command frame, potentially data and address frames and ends with a bus park cycle. A sequence may be transmitted by a master device or a request capable slave device.

Bus idle: The SPMI bus is idle when both the SCLK and SDATA are at a logic level zero between the end of a Sequence and the beginning of Bus Arbitration.

The System Power Management Interface (SPMI) is a two-wire serial interface that connects the integrated Power Controller (PC) of a System-on-Chip (SoC) processor system with one or more Power Management Integrated Circuits (PMIC) voltage regulation systems. SPMI enables systems to dynamically adjust the supply and substrate bias voltages of the voltage domains inside the SoC using a single SPMI bus.

Within the PC, the SPMI-related functions are referred to as the "Master" device. Within a PMIC, the SPMI related functions are referred to as the "Slave" device. There may be up to four master devices and up to sixteen slave devices on a single SPMI bus. Multiple SPMI master devices and slave devices may reside on a single IC, on several separate ICs or any combination of the two.

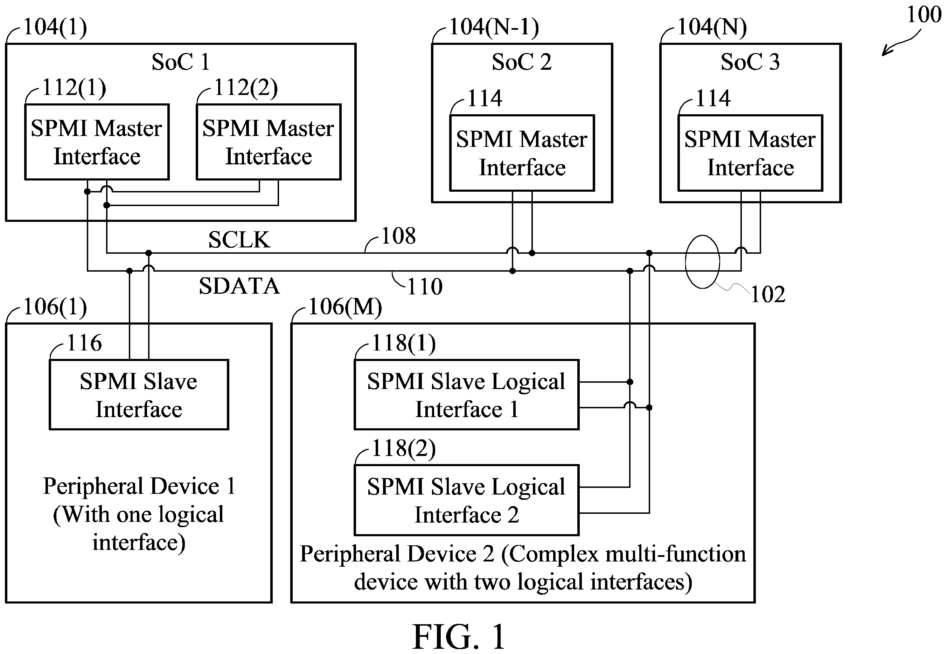

FIG. 1 is a block diagram of an SPMI system 100 having multiple master devices and multiple slave devices attached to a two-wire SPMI bus 102. In this regard, the SPMI system 100 includes a plurality of master devices 104(1)-104(N) and a plurality of slave devices 106(1)-106(M). As illustrated, N=3 and M=2, but it should be appreciated that the SPM standard allows up to four master devices 104 and up to sixteen slave devices 106. The SPMI bus 102 may include a clock line 108 and a data line 110 (also referred as SCLK and SDATA, respectively, in FIG. 1). A given master device 104(1) may have multiple (in this case two) SPMI interfaces 112(1)-112(2) coupled to the SPMI bus 102. More commonly, a master device such as master device 104(N) may have a single SPMI interface 114 coupled to the SPMI bus 102. Similarly, a slave device such as slave device 106(1) may have a single SPMI interface 116 and a slave device such as slave 106(M) may have multiple (in this case two) SPMI interfaces 118(1)-118(2).

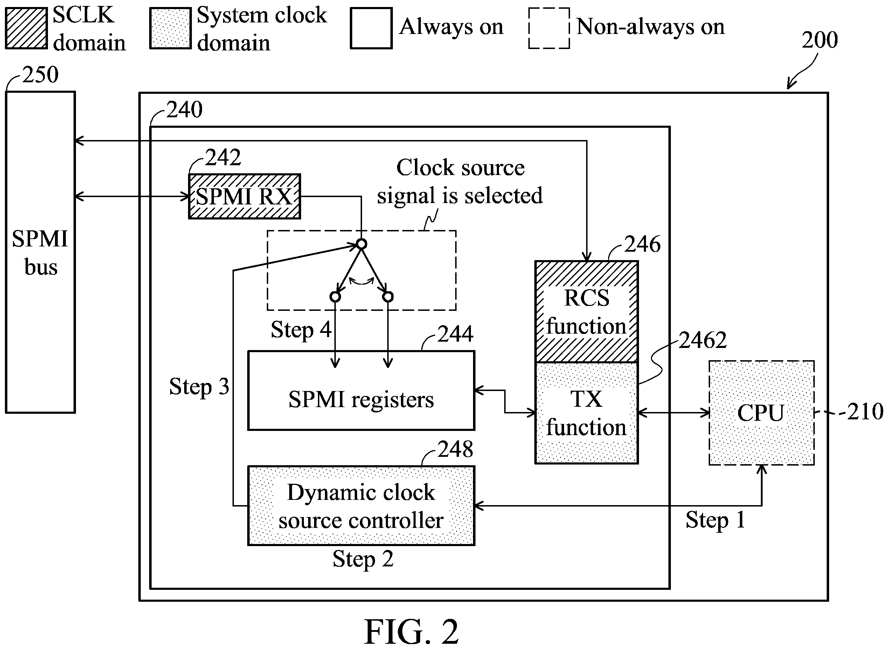

FIG. 2 is a schematic diagram illustrating an example slave device 200 for saving power according to an embodiment of the disclosure. The slave device 200 may include a central processing unit (CPU) 210 and a SPMI slave subsystem 240. The SPMI slave subsystem 240 includes a SPMI receiver 242 (sometimes referred to as SPMI RX in the drawings), SPMI registers 244, a Request Capable Slave (RCS) function 246 and a transmission (TX) function 2462, a dynamic clock source controller 248.

In an embodiment, the CPU 210 belongs to a component having a non-always on function, and the SPMI receiver 242, the SPMI registers 244, the RCS function 246, the TX function 2462, and the dynamic clock source controller 248 supports an always-on function.

In FIG. 2, the CPU 210 is coupled to the TX function 2462 and the dynamic clock source controller 248, the SPMI registers 244 is coupled to the SPMI receiver 242, the TX function 2462 and the dynamic clock source controller 248, and the RCS function 246 is coupled to the TX function 2462.

In the slave device 200, the SPMI receiver 242 and the RCS function 246 belong to the SCLK domain, while the CPU 210, the TX function 2462, and the dynamic clock source controller 248 belong to the system clock domain. The SPMI registers 244 can be accessed in both the SCLK domain and the system clock domain. Specifically, the SPMI receiver 242, the SPMI registers 244, the RCS function 246 may operate when the SCLK runs or the system clock is turned on, and the SCLK only runs while data is being transferred on the SPMI bus 250. The CPU 210, the TX function 2462, the SPMI registers 244 and the dynamic clock source controller 248 operates when the system clock is turned on.

In one embodiment, it is noted that the SPMI registers 244 could be operating upon both clock sources. That said, The SPMI registers can be clocked by the SPMI clock (SCLK) and the system clock. Upon the clock source signal from the dynamic clock source controller 248, the clock source of the SPMI registers 244 would be determined. When the SCLK is chosen according to the clock source signal from the dynamic clock source controller 248, the clock source of the SPMI registers 244 would be switched to the SCLK and the SPMI registers 244 would work in the SCLK domain accordingly. Instead, when the system clock is chosen according to the clock source signal from the dynamic clock source controller 248, the clock source of the SPMI registers 244 would be switched to the system clock and the SPMI registers 244 can operate in the system clock domain accordingly. In the embodiment of the present disclosure, the clock source of the SPMI registers 244 are able to be switched between the SCLK and the system clock dynamically according to the clock source signal. For example, the SPMI registers 244 may include ten registers. All of the ten registers can be accessible for both the SCLK domain and the system clock domain.

An external device (not shown in FIG. 2) may communicate with the slave device 200 via the SPMI bus 250, wherein the external device is a SPMI master device.

When the CPU 210 wants to sleep, the CPU 210 may transmit a first switch request to the dynamic clock source controller 248 and enters sleep mode, wherein the first switch request indicates to switch a clock source from a system clock to a system power management interface (SPMI) clock (SCLK).

The dynamic clock source controller 248 receives the first switch request indicating to switch the clock source from the system clock to the SCLK when the slave device enters sleep mode (Step 1).

Then, the dynamic clock source controller 248 detects whether the SPMI bus 250 is idle (Step 2).

Next, the dynamic clock source controller 248 transmits a clock source signal indicating to switch the clock source from the system clock to the SCLK to the SPMI registers 244 in response to the SPMI bus being idle (Step 3).

The SPMI registers 244 switches the clock source from the system clock to the SCLK according to the first clock source signal (Step 4).

In other words, in the sleep mode, the system clock is turned off and the slave device is clocked by the SPMI clock (SCLK). Since the SPMI receiver 242, the SPMI registers 244 and the RCS function 246 belong to the SCLK domain, the SPMI receiver 242, the SPMI registers 244 and the RCS function 246 still run when the system clock is turned off. The slave device 200 may allow the external device to access the SPMI registers 244 via the SPMI bus 250 when the slave device 200 is in the sleep mode.

Once the CPU 210 wants to wake up, the CPU 210 may transmit a second switch request to the dynamic clock source controller 248 and enters wake-up mode, wherein the second switch request indicates to switch the clock source from the SCLK to the system clock.

Then, the dynamic clock source controller 248 receives the second switch request indicating to switch the clock source from the SCLK to the system clock when the slave device enters wake-up mode.

Next, the dynamic clock source controller 248 transmits a clock source signal indicating to switch the clock source from the SCLK to the system clock to the SPMI registers 244.

The SPMI registers 244 switches the clock source from the SCLK to the system clock according to the second clock source signal.

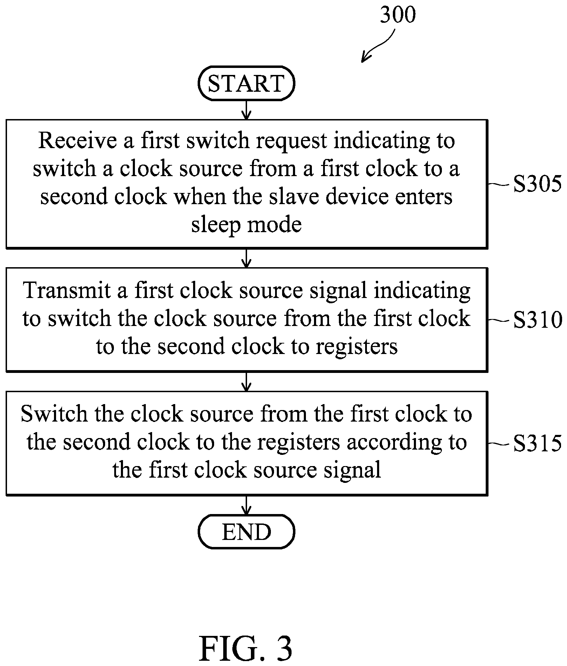

FIG. 3 is a flow chart 300 illustrating the method for saving power in a slave device according to an embodiment of the disclosure. In this embodiment, the method is applied to the slave device 200 in FIG. 2.

In step S305, the dynamic clock source controller of the slave device receives a first switch request indicating to switch a clock source from a first clock to a second clock when the slave device enters sleep mode, wherein the slave device is a SPMI slave device. In some embodiments, the first clock is a system clock, and the second clock is a system power management interface (SPMI) clock (SCLK).

In step S310, the dynamic clock source controller transmits a first clock source signal indicating to switch the clock source from the first clock to the second clock to registers, wherein the registers are the SPMI registers.

In step S315, the SPMI registers of the slave device switches the clock source from the first clock to the second clock according to the first clock source signal.

Before the dynamic clock source controller transmits the first clock source signal, the dynamic clock source controller may further detect whether a SPMI bus is idle. The dynamic clock source controller transmits the first clock source signal to the registers in response to the SPMI bus being idle

After the SPMI registers have switched the clock source from the first clock to the second clock, the registers which belong to the SCLK domain may be accessed by the external device, wherein the registers are clocked by the second clock when the slave device is in the sleep mode.

In some embodiments, the dynamic clock source controller may postpone transmitting the first clock source signal to the registers until the SPMI bus is idle in response to the SPMI bus not being idle.

In another embodiment, the dynamic clock source controller may further receive a second switch request indicating to switch the clock source from the second clock to the first clock when the slave device enters wake-up mode after step S320. Then, the dynamic clock source controller transmits a second clock source signal indicating to switch the clock source from the second clock to the first clock to the registers. The registers switch the clock source from the second clock to the first clock according to the second clock source signal.

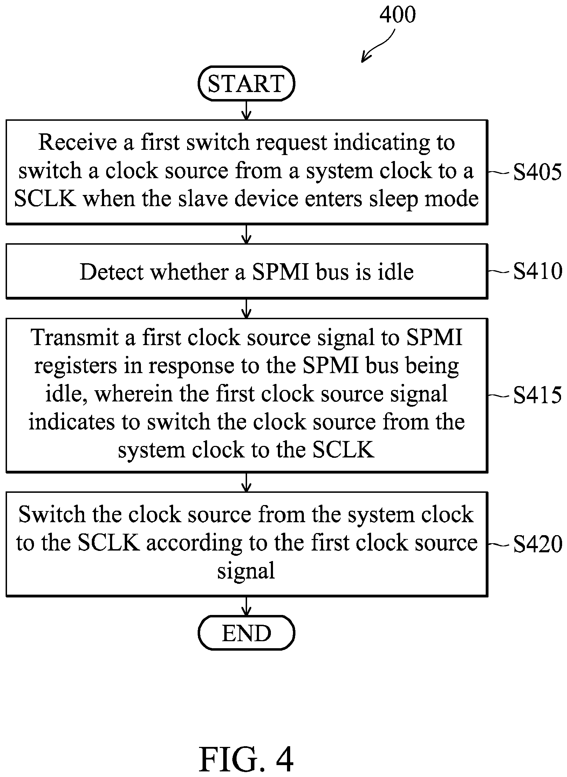

FIG. 4 is a flow chart 400 illustrating the method for saving power in a slave device according to an embodiment of the disclosure. In this embodiment, the method is applied to the slave device 200 in FIG. 2.

In step S405, the dynamic clock source controller of the slave device receives a first switch request indicating to switch a clock source from a system clock to a system power management interface (SPMI) (SCLK) when the slave device enters sleep mode, wherein the slave device is a SPMI slave device.

Then, in step S410, the dynamic clock source controller of the slave device detects whether a SPMI bus is idle.

In step S415, the dynamic clock source controller transmits a first clock source signal indicating to switch the clock source from the system clock to the SCLK to SPMI registers in response to the SPMI bus being idle.

In step S420, the SPMI registers of the slave device switch the clock source from the system clock to the SCLK according to the first clock source signal.

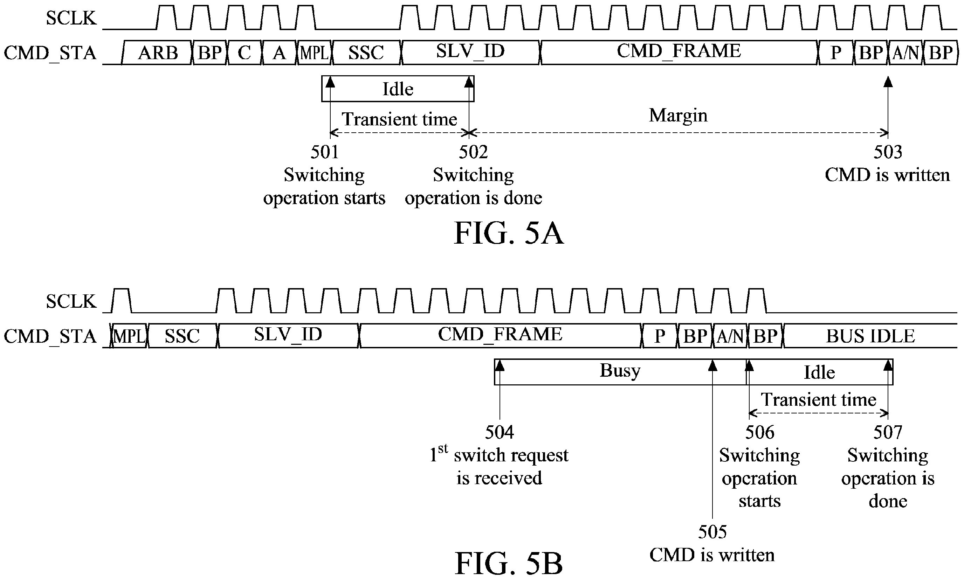

FIGS. 5A~5C shows three sets of timing waveforms associated with a switch operation of a slave device according to an embodiment of the disclosure. The timing waveforms illustrate the waveforms associated with the SPMI clock signal SCLK, the command status CMD_STA and the switching operation of the slave device, wherein the command status CMD_STA depicts the status of the command sent by the external device.

FIG. 5A shows a set of timing waveform depicting a switching operation during an idle period according to an embodiment of the disclosure. The switching operation starts when the dynamic clock source controller receives a first switch request from the CPU at 501. The clock source is switched immediately from the system clock to the SCLK during the idle period, and the switching operation is done at 502. The interval between 501 and 502 is called a transient time. A command is written into the SPMI registers by the external device at 503. As shown in FIG. 5A, as long as the dynamic clock source controller receives the first switch request during any idle period, the switching operation can be done before the external device writes the command into the SPMI registers.

FIG. 5B shows a set of timing waveform depicting a switching operation during a busy period according to an embodiment of the disclosure. The dynamic clock source controller receives the first switch request from the CPU at 504. Since the first switch request is received during the busy period in which a command is written into the SPMI registers at 505, the dynamic clock source controller postpones transmitting the first clock source signal to the SPMI registers until the SPMI bus is idle at 506, and the switching operation is done at 507. As shown in FIG. 5B, when the switching operation occurs during any busy period, the clock source will be switched from the system clock to the SCLK during the next idle period.

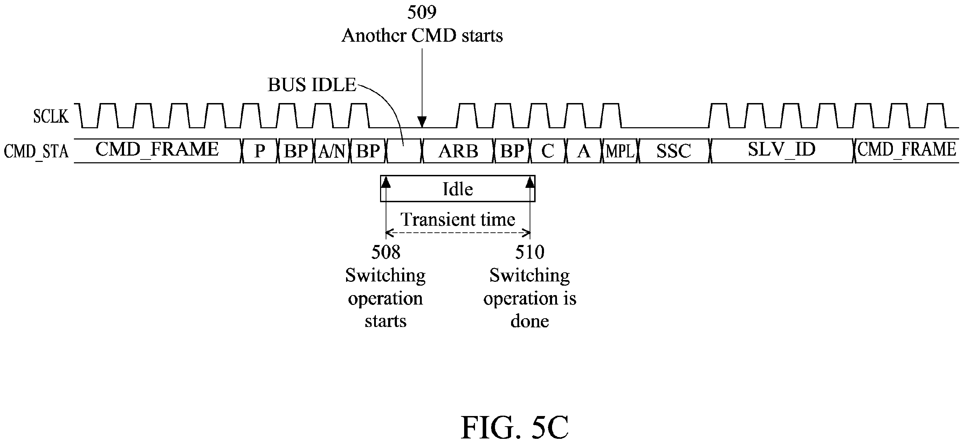

FIG. 5C shows a set of timing waveform depicting a switching operation during a busy period for a back-to-back transaction according to an embodiment of the disclosure.

The switching operation starts at 508 when the dynamic clock source controller receives a first switch request from the CPU and the last command has been written into the SPMI registers. Another command CMD starts at 509, and the switching operation can still be done at 510. Obviously, the transient time of clock switching between 508 and 510 is much smaller than the interval between two consecutive commands which are written into the SPMI registers. Those skilled in the art will understand that the command is written into the SPMI registers at the time point between BP and A/N (BP→A/N). In other words, although the commands are transmitted intensively, there is still enough time to switch between the system clock and SCLK without causing the situation of "cannot switch the clock source when the most intensive command transmission occurs".

As mentioned above, the method and device for saving power in the disclosure may still enable the external device to access to the SPMI registers when system clock is turned off. In other words, without waking up the whole slave device, the SPMI-related function registers may still be accessed and updated, which can more effectively achieve the purpose of saving power. In addition, the external device may transmit SPMI commands to the updated registers at any time, achieving the effect of zero resume latency.

It should be noted that the CPU 210, the SPMI receiver 242, the SPMI registers 244, the RCS function 246, the TX function 2462 and the dynamic clock source controller 248 in FIG. 2 may be implemented in hardware, software, firmware, or any combination thereof. For example, the CPU 210, the SPMI receiver 242, the SPMI registers 244, the RCS function 246, the TX function 2462 and the dynamic clock source controller 248 may be implemented as computer program code configured to be executed in one or more processors. Alternatively, the CPU 210, the SPMI receiver 242, the SPMI registers 244, the RCS function 246, the TX function 2462 and the dynamic clock source controller 248 may be implemented as hardware logic/electrical circuitry.

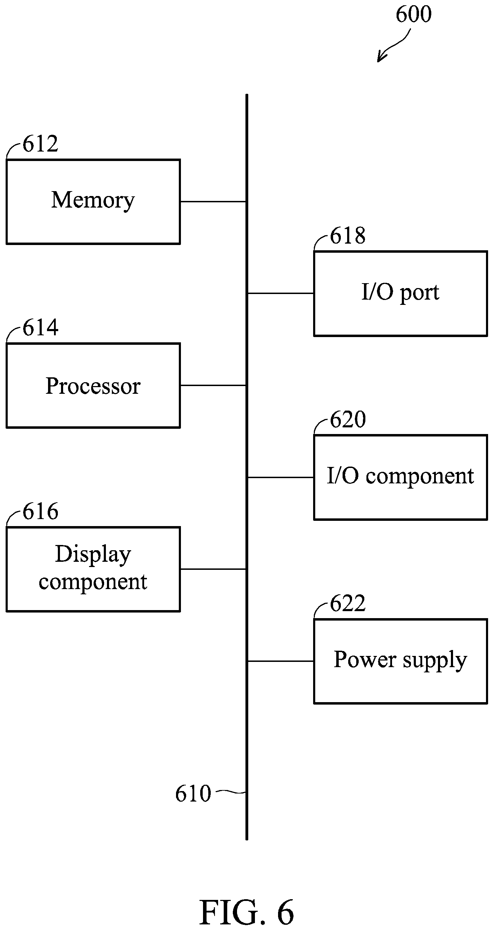

The embodiments described herein, including systems, methods/processes, and/or apparatuses, may be implemented using well known servers/computers, such as an electronic device 600 shown in FIG. 6. For example, the slave device 200 can be implemented using one or more electronic device 600. The electronic device 600 is described as follows, for purposes of illustration.

Referring to FIG. 6, an exemplary operating environment for implementing embodiments of the present disclosure is shown and generally known as an electronic device 600. The electronic device 600 is merely an example of a suitable computing environment and is not intended to limit the scope of use or functionality of the disclosure. Neither should the electronic device 600 be interpreted as having any dependency or requirement relating to any one or combination of components illustrated.

The disclosure may be realized by means of the computer code or machine-useable instructions, including computer-executable instructions such as program modules, being executed by a computer or other machine, such as a personal data assistant (PDA) or other handheld device. Generally, program modules may include routines, programs, objects, components, data structures, etc., and refer to code that performs particular tasks or implements particular abstract data types. The disclosure may be implemented in a variety of system configurations, including hand-held devices, consumer electronics, general-purpose computers, more specialty computing devices, etc. The disclosure may also be implemented in distributed computing environments where tasks are performed by remote-processing devices that are linked by a communication network.

With reference to FIG. 6, the electronic device 600 may include a bus 610 that is directly or indirectly coupled to the following devices: one or more memories 612, one or more processors 614, one or more display components 616, one or more input/output (I/O) ports 618, one or more input/output components 620, and an illustrative power supply 622. The bus 610 may represent one or more kinds of busses (such as an address bus, data bus, or any combination thereof). Although the various blocks of FIG. 6 are shown with lines for the sake of clarity, and in reality, the boundaries of the various components are not specific. For example, the display component such as a display device may be considered an I/O component and the processor may include a memory.

The electronic device 600 typically includes a variety of computer-readable media. The computer-readable media can be any available media that can be accessed by electronic device 600 and includes both volatile and nonvolatile media, removable and non-removable media. By way of example, not limitation, computer-readable media may comprise computer storage media and communication media. The computer storage media may include volatile and nonvolatile, removable and non-removable media implemented in any method or technology for storage of information such as computer-readable instructions, data structures, program modules or other data. The computer storage media may include, but not limit to, random access memory (RAM), read-only memory (ROM), electrically-erasable programmable read-only memory (EEPROM), flash memory or other memory technology, compact disc read-only memory (CD-ROM), digital versatile disks (DVD) or other optical disk storage, magnetic cassettes, magnetic tape, magnetic disk storage or other magnetic storage devices, or any other medium which can be used to store the desired information and which can be accessed by the electronic device 600. The computer storage media may not comprise signals per se.

The communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, but not limitation, communication media includes wired media such as a wired network or direct-wired connection, and wireless media such as acoustic, RF, infrared and other wireless media or any combination thereof.

The memory 612 may include computer-storage media in the form of volatile and/or nonvolatile memory. The memory may be removable, non-removable, or a combination thereof. Exemplary hardware devices include solid-state memory, hard drives, optical-disc drives, etc. The electronic device 600 includes one or more processors that read data from various entities such as the memory 612 or the I/O components 620. The display component(s) 616 present data indications to a user or to another device. Exemplary presentation components include a display device, speaker, printing component, vibrating component, etc.

The I/O ports 618 allow the computing device 600 to be logically coupled to other devices including the I/O components 620, some of which may be embedded. Illustrative components include a microphone, joystick, game pad, satellite dish, scanner, printer, wireless device, etc. The I/O components 620 may provide a natural user interface (NUI) that processes gestures, voice, or other physiological inputs generated by a user. For example, inputs may be transmitted to an appropriate network element for further processing. A NUI may be implemented to realize speech recognition, touch and stylus recognition, facial recognition, biometric recognition, gesture recognition both on screen and adjacent to the screen, air gestures, head and eye tracking, touch recognition associated with displays on the electronic device 600, or any combination thereof. The electronic device 600 may be equipped with depth cameras, such as stereoscopic camera systems, infrared camera systems, RGB camera systems, or any combination thereof, to realize gesture detection and recognition. Furthermore, the electronic device 600 may be equipped with accelerometers or gyroscopes that enable detection of motion. The output of the accelerometers or gyroscopes may be provided to the display of the electronic device 600 to carry out immersive augmented reality or virtual reality.

Furthermore, the processor 614 in the electronic device 600 can execute the program code in the memory 612 to perform the above-described actions and steps or other descriptions herein.

It should be understood that any specific order or hierarchy of steps in any disclosed process is an example of a sample approach. Based upon design preferences, it should be understood that the specific order or hierarchy of steps in the processes may be rearranged while remaining within the scope of the present disclosure. The accompanying method claims present elements of the various steps in a sample order, and are not meant to be limited to the specific order or hierarchy presented.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

While the disclosure has been described by way of example and in terms of the preferred embodiments, it should be understood that the disclosure is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method (300, 400) for saving power, used in a slave device (200), comprising:
receiving (S305, S405) a first switch request indicating to switch a clock source from a first clock to a second clock when the slave device (200) enters sleep mode;
transmitting (S310, S415) a first clock source signal indicating to switch the clock source from the first clock to the second clock to registers (244); and
switching (S315, S420) the clock source from the first clock to the second clock to the registers (244) according to the first clock source signal.

2. The method (300, 400) as claimed in claim 1, further comprising:
detecting (S410) whether a SPMI bus (250) is idle; and
transmitting (S415) the first clock source signal to the registers (244) in response to the SPMI bus (250) being idle.

3. The method (300, 400) as claimed in claim 2, further comprising:
postponing transmitting the first clock source signal to the registers until the SPMI bus (250) is idle in response to the SPMI bus (250) not being idle.

4. The method (300, 400) as claimed in claim 1, further comprising:
receiving a second switch request indicating to switch the clock source from the second clock to the first clock when the slave device enters wake-up mode; and
transmitting a second clock source signal indicating to switch the clock source from the second clock to the first clock to the registers (244).

5. The method (300, 400) as claimed in claim 4, further comprising:
switching the clock source from the second clock to the first clock to the registers according to the second clock source signal.

6. The method (300, 400) as claimed in claim 1, wherein the slave device (200) is clocked by the second clock when the slave device (200) is in the sleep mode;
or wherein the method (300, 400) further comprises allowing an external device to access the registers (244) via a SPMI bus (250), wherein the registers (244) are clocked by the second clock when the slave device is in the sleep mode;
or wherein the first clock is a system clock, and the second clock is a system power management interface, SPMI, clock, SCLK.

7. The method (300, 400) as claimed in claim 1, wherein the slave device (200) is a SPMI slave device.

8. The method (300, 400) as claimed in claim 7, wherein the external device is a SPMI master device.

9. A device (200) for saving power, comprising:
a processor (210);
registers (244); and
a dynamic clock source controller (248) coupled to the processor (210) and the registers (244), wherein the dynamic clock source controller (248) is configured to:
receive a first switch request indicating to switch a clock source from a first clock to a second clock when the device (200) enters sleep mode;
transmit a first clock source signal indicating to switch the clock source from the first clock to the second clock to registers (244); and
switch the clock source from the first clock to the second clock to the registers (244) according to the first clock source signal.

10. The device (200) as claimed in claim 9, wherein the dynamic clock source controller (248) is further configured to:
detect whether a SPMI bus (250) is idle; and
transmit the first clock source signal to the registers (244) in response to the SPMI bus (250) being idle.

11. The device (200) as claimed in claim 10, wherein the dynamic clock source controller (248) is further configured to:
postpone transmitting the first clock source signal to the registers (244) until the SPMI bus (250)is idle in response to the SPMI bus (250) not being idle.

12. The device (200) as claimed in claim 9, wherein the dynamic clock source controller (248) is further configured to:
receive a second switch request indicating to switch the clock source from the second clock to the first clock when the device (200) enters wake-up mode; and
transmit a second clock source signal indicating to switch the clock source from the second clock to the first clock to the registers (244).

13. The device (200) as claimed in claim 12, wherein the registers (244) are further configured to:
switch the clock source from the second clock to the first clock according to the second clock source signal.

14. The device (200) as claimed in claim 9, wherein the device is clocked by the second clock when the device (200) is in the sleep mode;
or wherein the device (200) is a SPMI slave device;
or wherein the dynamic clock source controller (248) is further configured to: allow an external device to access the registers (244) via a SPMI bus (250), wherein the registers (244) are clocked by the second clock when the device (200) is in the sleep mode;
or wherein the first clock is a system clock, and the second clock is a system power management interface, SPMI, clock, SCLK.

15. A non-transitory computer-readable storage medium containing instructions that, when executed by a subsystem in a slave device (200), cause the slave device (200) to perform a method (300, 400) for saving power, the method (300, 400) comprising:
receiving (S305, S405) a first switch request indicating to switch a clock source from a system clock to a system power management interface, SPMI, clock, SCLK, when the slave device (200) enters sleep mode;
detecting (S410) whether a SPMI bus is idle;
transmitting (S310, S415) a first clock source signal indicating to switch the clock source from the system clock to the SCLK to SPMI registers in response to the SPMI bus being idle; and
switching (S315, S420) the clock source from the system clock to the SCLK by the SPMI registers according to the first clock source signal.
